(19)

Europäisches
Patentamt
European
Patent Office
Office européen
des brevets

(11) **EP 4 550 224 A1**

(12) **EUROPEAN PATENT APPLICATION**
published in accordance with Art. 153(4) EPC

(43) Date of publication:
**07.05.2025   Bulletin 2025/19**

(21) Application number: **23838712.0**

(22) Date of filing: **29.06.2023**

(51) International Patent Classification (IPC):
***G06N 20/00*** (2019.01)

(52) Cooperative Patent Classification (CPC):
**G06N 20/00**

(86) International application number:
**PCT/CN2023/103919**

(87) International publication number:
**WO 2024/012219 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **15.07.2022   CN 202210836072**

(71) Applicant: **Huawei Technologies Co., Ltd.
Shenzhen, Guangdong 518129 (CN)**

(72) Inventors:
 • **DAI, Quanyu
   Shenzhen, Guangdong 518129 (CN)**

 • **WU, Peng
   Shenzhen, Guangdong 518129 (CN)**
 • **LI, Haoxuan
   Shenzhen, Guangdong 518129 (CN)**
 • **DONG, Zhenhua
   Shenzhen, Guangdong 518129 (CN)**
 • **TANG, Ruiming
   Shenzhen, Guangdong 518129 (CN)**

(74) Representative: **Grünecker Patent- und
Rechtsanwälte
PartG mbB
Leopoldstraße 4
80802 München (DE)**

(54) **RELATED APPARATUS OF MODEL TRAINING METHOD**

(57)      Embodiments of this application disclose a model training method and a related apparatus, to improve a generalization capability of a prediction model. The method in embodiments of this application includes: calculating a loss function of an error imputation model based on a first error of a prediction result of a prediction model for first sample data, a first output of the error imputation model, and a probability that the first sample data is observed; and then updating a parameter of the error imputation model based on the loss function of the error imputation model, where the first output of the error imputation model represents a predicted value of the first error, the loss function of the error imputation model includes a bias term and a variance term, the bias term represents a bias between an actual loss function and a theoretical loss function of the prediction model, and the variance term represents a variance between the actual loss function and the theoretical loss function of the prediction model.

Output, by using a target probability model and based on input first sample data, a probability that the first sample data is observed — 101

Calculate a loss function of an error imputation model based on a first error of a prediction result of a prediction model for the first sample data, a first output of the error imputation model, and the probability that the first sample data is observed — 102

Update a parameter of the error imputation model based on the loss function of the error imputation model — 103

Calculate a loss function of the prediction model based on a second error of a prediction result of the prediction model for second sample data, a second output of the error imputation model, a probability that the second sample data is observed, and indication information of the second sample data — 104

Update a parameter of the prediction model based on the loss function of the prediction model — 105

FIG. 4

EP 4 550 224 A1

**Description**

This application claims priority to Chinese Patent Application No. 202210836072.4, filed with the China National Intellectual Property Administration on July 15, 2022 and entitled "RELATED APPARATUS OF MODEL TRAINING METHOD", which is incorporated herein by reference in its entirety.

**TECHNICAL FIELD**

This application relates to the field of artificial intelligence technologies, and in particular, to a related apparatus of a model training method.

**BACKGROUND**

With the development of artificial intelligence technologies, a personalized recommendation system has been increasingly widely used.

A workflow of the personalized recommendation system is as follows: Training is performed by using sample data, to obtain a prediction model, then a preference degree of a user for a to-be-recommended item is predicted by using the prediction model, and then an item is recommended to the user based on a prediction result. The sample data includes user behavior, a commodity feature, and context information. The sample data is labeled (that is, includes a preference degree for an item), and is usually from a historical interaction log between a user and the recommendation system.

However, the sample data is affected by a selection bias problem, and distribution of the sample data is biased. Specifically, this may be understood as that the sample data includes only preference degrees of some users for some items instead of preference degrees of all users for all items, that is, some unlabeled data is not included in the sample data. A selection bias includes a user selection bias and a system exposure bias.

The user selection bias is used as an example. On a movie scoring website, users tend to score movies that the users particularly like or dislike. Therefore, most of collected sample data is a score of a user for a movie that the user particularly likes or dislikes, and there is a lack of a score of the user for a movie with an average degree of liking.

However, an obtained prediction model is biased if training is performed by using biased sample data. Consequently, a preference degree that is of a user for an item and that is output by the prediction model is inaccurate, affecting a recommendation success rate.

To resolve the foregoing problem, in addition to the labeled sample data, the prediction model further needs to be trained by using unlabeled data. Currently, a main method that can train the prediction model by using the labeled data is to introduce an error imputation (Error Imputation) model.

In a common learning method, the sample data is predicted by using the prediction model, then a loss function is constructed based on an error between a prediction result and a label, and then a parameter of the prediction model is updated based on the loss function. However, for the unlabeled data, the error between the prediction result and the label cannot be directly calculated. The error imputation (Error Imputation) model can exactly resolve this problem. The error imputation model may output a predicted value of the error between the prediction result and the label, and the predicted value may be used to replace the error between the prediction result and the label, to construct a loss function, so as to update the parameter of the prediction model.

However, a prediction model obtained through training by using an existing error imputation model has a weak generalization capability. Consequently, accuracy of a prediction result of the prediction model for some input data is low. Therefore, how to train the error imputation model to improve the generalization capability of the prediction model is an urgent problem that needs to be resolved.

**SUMMARY**

Embodiments of this application provide a model training method and a related apparatus, to improve a generalization capability of a prediction model.

According to a first aspect, this application provides a model training method, including: calculating a loss function of an error imputation model based on a first error of a prediction result of a prediction model for first sample data, a first output of the error imputation model, and a probability that the first sample data is observed, where the first error is a difference between the prediction result of the prediction model for the first sample data and a label of the first sample data, the first output of the error imputation model represents a predicted value of the first error, the loss function of the error imputation model includes a bias term and a variance term, the bias term represents a bias between an actual loss function and a theoretical loss function of the prediction model, and the variance term represents a variance between the actual loss function and the theoretical loss function of the prediction model; and updating a parameter of the error imputation model based on the loss function of the error imputation model.

The loss function of the error imputation model includes the bias term and the variance term. The bias term represents the bias between the actual loss function and the theoretical loss function of the prediction model, and the variance term represents the variance between the actual loss function and the theoretical loss function of the prediction model. A generalization bound of the prediction model is mainly determined based on an error, a bias, and a variance of the prediction model, and the prediction model is obtained through training by using the error imputation model. Therefore, in this application, the error imputation model is trained by using the loss function including the bias term and the variance term, to improve a generalization capability of the prediction model and improve stability of the prediction model, so that a trained prediction model is close to an unbiased model, to improve prediction accuracy of the model.

In an implementation, the bias term is obtained based on the first error, the first output of the error imputation model, and the probability that the first sample data is observed; and/or the variance term is obtained based on the first error, the first output of the error imputation model, and the probability that the first sample data is observed.

In a doubly robust learning (Doubly Robust Learning) method, the prediction model is trained by using both a probability that sample data is observed and a predicted value of an error. In this application, the bias term may be obtained based on the first error, the first output of the error imputation model, and the probability that the first sample data is observed, and the variance term is also obtained based on the first error, the first output of the error imputation model, and the probability that the first sample data is observed. It can be learned, based on advantages of the doubly robust learning method, that in the method in this application, a generalization capability of the prediction model can be further improved, so that a trained prediction model is closer to an unbiased model, to further improve prediction accuracy of the model.

In an implementation, the loss function of the error imputation model is obtained by performing weighted summation on the bias term and the variance term based on a weight of the bias term and a weight of the variance term.

In an implementation, the weight of the bias term and/or the weight of the variance term are/is obtained based on the first sample data.

The weight of the bias term and the weight of the variance term are dynamically calculated based on the first sample data, so that the weight of the bias term and the weight of the variance term can adapt to the first sample data, and accuracy of the weight of the bias term and the weight of the variance term is improved, to improve accuracy of the loss function of the error imputation model and improve training effect of the error imputation model, so as to improve generalizability of the prediction model.

In an implementation, the bias term is $\sum_{(u,i)\in D} \frac{o_{u,i}(\hat{e}_{u,i}-e_{u,i})^2}{\hat{p}_{u,i}} \times \frac{(o_{u,i}-\hat{p}_{u,i})^2}{\hat{p}_{u,i}{}^2}$ , where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the variance term is $\sum_{(u,i)\in D} \frac{o_{u,i}(\hat{e}_{u,i}-e_{u,i})^2}{\hat{p}_{u,i}} \times \frac{(1-\hat{p}_{u,i})}{\hat{p}_{u,i}}$ , where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the probability that the first sample data is observed is output by a target probability model based on the input first sample data, and the target probability model may be obtained through pre-training.

In an implementation, after the updating a parameter of the error imputation model based on the loss function of the error imputation model, the method further includes: calculating a loss function of the prediction model based on a second error of a prediction result of the prediction model for second sample data, a second output of the error imputation model, a probability that the second sample data is observed, and indication information of the second sample data, where the second output of the error imputation model represents a predicted value of the second error, the indication information indicates whether the second sample data is observed, and the second sample data may be the same as the first sample data, or may be different from the first sample data; and when the second sample data is different from the first sample data, the second sample data may be labeled data, or may be unlabeled data; and updating a parameter of the prediction model based on the loss function of the prediction model.

The loss function of the error imputation model includes the bias term and the variance term. The bias term represents the bias between the actual loss function and the theoretical loss function of the prediction model, and the variance term represents the variance between the actual loss function and the theoretical loss function of the prediction model. A generalization bound of the prediction model is mainly determined based on an error, a bias, and a variance of the prediction model. Therefore, the error imputation model is obtained through training by using the loss function of the error imputation model, and then the prediction model is trained by using an output of the error imputation model, to improve a generalization capability of the prediction model and improve stability of the prediction model, so that a trained prediction model is close to an unbiased model, to improve prediction accuracy of the model.

According to a second aspect, this application provides a model training apparatus, including: a calculation unit, configured to calculate a loss function of an error imputation model based on a first error of a prediction result of a prediction model for first sample data, a first output of the error imputation model, and a probability that the first sample data is observed, where the first output of the error imputation model represents a predicted value of the first error, the loss function of the error imputation model includes a bias term and a variance term, the bias term represents a bias between an actual loss function and a theoretical loss function of the prediction model, and the variance term represents a variance between the actual loss function and the theoretical loss function of the prediction model; and an updating unit, configured to update a parameter of the error imputation model based on the loss function of the error imputation model.

In an implementation, the bias term is obtained based on the first error, the first output of the error imputation model, and the probability that the first sample data is observed; and/or the variance term is obtained based on the first error, the first output of the error imputation model, and the probability that the first sample data is observed.

In an implementation, the loss function of the error imputation model is obtained by performing weighted summation on the bias term and the variance term based on a weight of the bias term and a weight of the variance term.

In an implementation, the weight of the bias term and/or the weight of the variance term are/is obtained based on the first sample data.

In an implementation, the bias term is
$$\sum_{(u,i)\in D} \frac{o_{u,i}(\hat{e}_{u,i}-e_{u,i})^2}{\hat{p}_{u,i}} \times \frac{(o_{u,i}-\hat{p}_{u,i})^2}{\hat{p}_{u,i}^{\;2}};$$
, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the variance term is
$$\sum_{(u,i)\in D} \frac{o_{u,i}(\hat{e}_{u,i}-e_{u,i})^2}{\hat{p}_{u,i}} \times \frac{(1-\hat{p}_{u,i})}{\hat{p}_{u,i}}$$
, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the probability that the first sample data is observed is output by a target probability model based on the input first sample data.

In an implementation, the calculation unit is further configured to calculate a loss function of the prediction model based on a second error of a prediction result of the prediction model for second sample data, a second output of the error imputation model, a probability that the second sample data is observed, and a label of the second sample data, where the second output of the error imputation model represents a predicted value of the second error, and the label of the second sample data indicates whether evaluation of a user on an object is observed; and the updating unit is further configured to update a parameter of the prediction model based on the loss function of the prediction model.

According to a third aspect, this application provides a computer device. The computer device includes a memory and a processor. The processor is configured to execute a computer program or instructions stored in the memory, to enable the computer device to perform the method according to any implementation of the first aspect.

According to a fourth aspect, this application provides a computer-readable storage medium. The computer-readable storage medium has program instructions, and when the program instructions are directly or indirectly executed, the method according to any implementation of the first aspect is implemented.

According to a fifth aspect, this application provides a chip system. The chip system includes at least one processor. The processor is configured to execute a computer program or instructions stored in a memory. When the computer program or the instructions are executed in the at least one processor, the method according to any implementation of the first aspect is implemented.

According to a sixth aspect, this application provides a computer program product, including instructions. When the instructions are run on a computer, the computer is enabled to perform the method according to any implementation of the first aspect.

## BRIEF DESCRIPTION OF DRAWINGS

FIG. 1 is a diagram of an architecture of a recommendation system;
FIG. 2 is a diagram of movie scoring;
FIG. 3 is a diagram of a principle of an advertisement recommendation system;
FIG. 4 is a diagram of an embodiment of a model training method according to an embodiment of this application;
FIG. 5 is a general diagram of a model training method according to an embodiment of this application;
FIG. 6 is a diagram of a CVR prediction network architecture according to an embodiment of this application;
FIG. 7 is a diagram of a structure of a model training apparatus according to an embodiment of this application; and
FIG. 8 is a diagram of a structure of a computer device according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

The terms "first" and "second", corresponding term numbers, and the like in the specification, the claims, and the accompanying drawings of this application are used to distinguish between similar objects, and are not necessarily used to describe a specific sequence or order. It should be understood that the terms used in such a manner are interchangeable in proper situations, and this is merely a distinguishing manner used when objects with a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

In descriptions of this application, "/" means "or" unless otherwise specified. For example, A/B may indicate A or B. In this application, "and/or" is merely an association relationship for describing associated objects, and indicates that three relationships may exist. For example, A and/or B may indicate the following three cases: Only A exists, both A and B exist, and only B exists. In addition, in the descriptions of this application, "at least one" means "one or more", and "a plurality of" means "two or more". "At least one of the following items" or a similar expression thereof means any combination of these items, including a single item or any combination of a plurality of items. For example, at least one of a, b, or c may indicate a, b, c, a and b, a and c, b and c, or a, b, and c, where a, b, and c may be singular or plural.

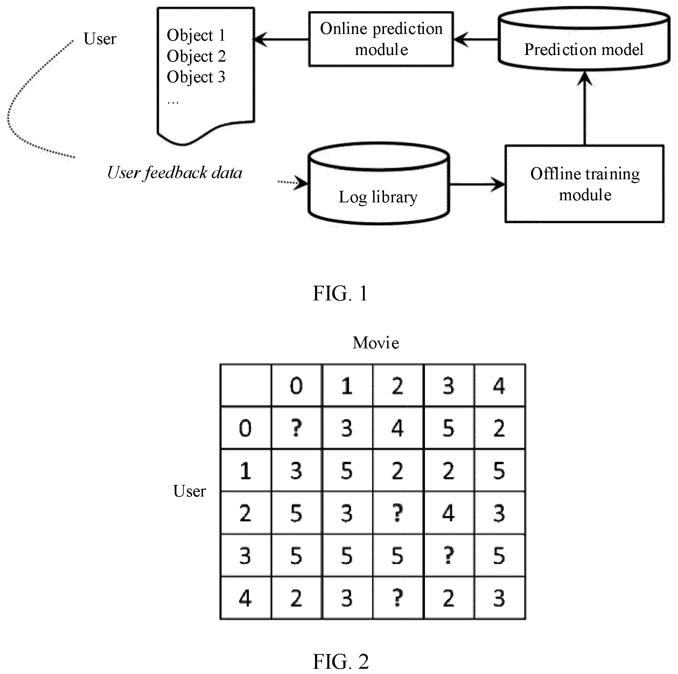

FIG. 1 is a diagram of an architecture of a recommendation system. The recommendation system includes a log library, an offline training module, and an online prediction module.

A log is stored in the log library, and the log is used to record a series of behavior data, for example, browsing, clicking, commenting, downloading, and the like, of a user in a front-end display list.

The offline training module is configured to perform offline training based on the log, to obtain a prediction model. The prediction model is used to predict a preference degree of a user for an object. It should be noted that a type of the object is not specifically limited in embodiments of this application. For example, the object may be news, an advertisement, a movie, a song, a commodity, or the like. The prediction model is deployed online to form the online prediction module.

The online prediction module is configured to output a recommendation result based on an access request of a user, an object feature, and context information. As shown in FIG. 1, the recommendation result is an object 1, an object 2, and an object 3 in the display list.

Behavior data of the user for the recommendation result forms user feedback data and is added to the log in the log library.

Embodiments of this application may be applied to the offline training module in FIG. 1.

It should be understood that sample data used for training the prediction model is affected by a selection bias problem. A selection bias includes a user selection bias and a system exposure bias.

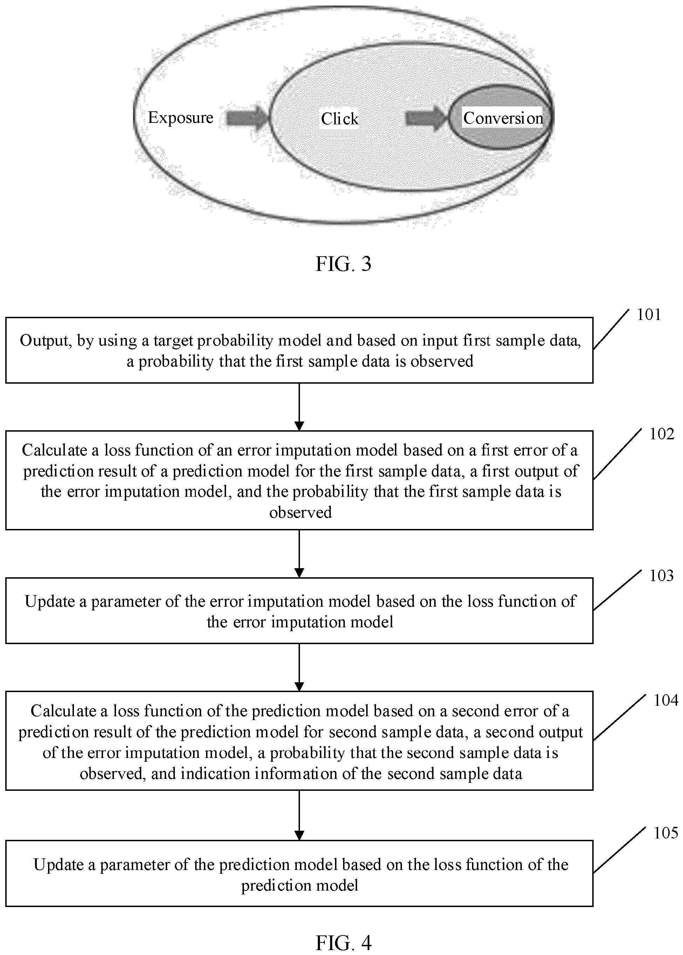

For ease of understanding, the following describes the user selection bias and the system exposure bias with reference to FIG. 2 and FIG. 3.

As shown in FIG. 2, a horizontal direction of the table represents different movies, a vertical direction of the table represents different users, and data in the table represents a score of a user for a movie. Because users selectively score movies, scores for some movies are unknown. A question mark in the table indicates that a score of the user for the movie is unknown. This is the user selection bias. In an existing training method, only data, namely, a known score of a user for a movie, is usually selected as sample data for training. Therefore, a prediction model obtained through training is biased.

As shown in FIG. 3, an advertisement recommendation process mainly includes three phases: exposure, click, and conversion. Exposure means that an advertisement is recommended to a user, click means that the user clicks on the recommended advertisement, and conversion means that the user purchases a commodity in the recommended advertisement after clicking on the advertisement. In the exposure phase, an advertisement is not randomly recommended to the user, but is selectively recommended to the user. In the click phase, the user clicks only on the recommended advertisement. Therefore, click behavior of the user on an advertisement that is not recommended is unknown. This is the system exposure bias. In an existing training method, behavior data of a user for a recommended advertisement is used as sample data for training. Therefore, a prediction model obtained through training is biased.

It can be learned that to implement an unbiased prediction model, two methods may be used. In one method, in addition to training the prediction model by using labeled data, the prediction model is further trained by using unlabeled data. FIG. 2 is used as an example. The labeled data is a movie scored by a user, and the unlabeled data is a movie that is not scored by the user. In the other method, distribution of observed data is adjusted by predicting a probability that sample data is observed, so that the biased observed data tends to be unbiased after adjustment. A training method that uses both the foregoing two methods may be referred to as a doubly robust learning (Doubly Robust Learning) method.

It should be understood that in a training process, a loss function needs to be constructed based on an error between a prediction result of the prediction model and a label, and then a parameter of the prediction model is updated based on the loss function. However, for the unlabeled data, the error cannot be directly calculated. Therefore, the error is predicted by using an error imputation (Error Imputation) model, a loss function is constructed by using a predicted value of the error output by the error imputation model, and then the parameter of the prediction model is updated based on the loss function. In this way, the prediction model can be trained by using full sample data (including the labeled data and the unlabeled data), so that a prediction model obtained through training is close to an unbiased model.

To improve performance of the error imputation model and improve a generalization capability of the prediction model, embodiments of this application provide a model training method. The method is a doubly robust learning (Doubly Robust Learning) method. In the method, a loss function of the error imputation model is calculated and includes a bias term and a variance term. The bias term represents a bias between an actual loss function and a theoretical loss function of a prediction model, and the variance term represents a variance between the actual loss function and the theoretical loss function of the prediction model. A generalization bound of the prediction model is mainly determined based on an error, a bias, and a variance of the prediction model, and the prediction model is obtained through training by using the error imputation model. Therefore, in embodiments of this application, the error imputation model is trained by using the loss function including the bias term and the variance term, to indirectly improve a generalization capability of the prediction model.

Embodiments of this application may be applied to a plurality of scenarios. For example, embodiments of this application may be applied to a post-click conversion rate prediction scenario. That is, a post-click conversion rate may be predicted by using a prediction model trained by using the method provided in embodiments of this application. The post-click conversion rate may be understood as a probability that a user purchases a commodity after clicking on the commodity. Embodiments of this application may be applied to a click-through rate prediction scenario. That is, a click-through rate may be predicted by using a prediction model trained by using the method provided in embodiments of this application. The click-through rate may be understood as a probability that a user clicks on an item when the item is recommended.

The model training method provided in embodiments of this application is described below in detail.

As shown in FIG. 4, an embodiment of this application provides an embodiment of a model training method, including the following steps.

Step 101: Output, by using a target probability model and based on input first sample data, a probability that the first sample data is observed.

The target probability model may also be referred to as a propensity score prediction model.

Specifically, the first sample data is input to the target probability model, and the target probability model outputs the probability that the first sample data is observed, that is, the probability that the first sample data is observed is output by the target probability model based on the input first sample data.

The first sample data usually includes two parts: a user and a target object. The target object may be a movie, news, a commodity, or the like.

The probability that the first sample data is observed may be understood as a probability that the first sample data can be obtained. For example, if the first sample data is a movie, the probability that the first sample data is observed may be understood as a probability that the user scores a movie or a probability that a score of the user for a movie can be obtained.

It should be noted that the target probability model may be obtained through pre-training. Because the target probability model is a mature model, a training process of the target probability model is not described in detail herein. In addition, the target probability model can be trained together with an error imputation model and a prediction model.

Because the probability that the first sample data is observed may be preset, step 101 is optional.

Step 102: Calculate a loss function of the error imputation model based on a first error of a prediction result of the prediction model for the first sample data, a first output of the error imputation model, and the probability that the first sample data is observed, where the loss function of the error imputation model includes a bias term and a variance term.

The first error is a difference between the prediction result of the prediction model for the first sample data and a label of the first sample data.

The first output of the error imputation model represents a predicted value of the first error.

The bias term represents a bias between an actual loss function and a theoretical loss function of the prediction model, and the variance term represents a variance between the actual loss function and the theoretical loss function of the prediction model. The bias term and the variance term may be calculated by using the actual loss function and the theoretical loss function of the prediction model.

The bias term may be obtained based on at least one of the first error, the first output of the error imputation model, and the probability that the first sample data is observed. In an implementation, the bias term is obtained based on the first error, the first output of the error imputation model, and the probability that the first sample data is observed.

For example, the bias term is $\sum_{(u,i)\in D} \frac{o_{u,i}(\hat{e}_{u,i}-e_{u,i})^2}{\hat{p}_{u,i}} \times \frac{(o_{u,i}-\hat{p}_{u,i})^2}{\hat{p}_{u,i}^2}$, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed.

When a value of $o_{u,i}$ is 1, $o_{u,i}$ represents that the first sample data is observed; or when a value of $o_{u,i}$ is 0, $o_{u,i}$ represents that the first sample data is not observed.

Similarly, the variance term may be obtained based on at least one of the first error, the first output of the error imputation model, and the probability that the first sample data is observed. In an implementation, the variance term is obtained based on the first error, the first output of the error imputation model, and the probability that the first sample data is observed.

For example, the variance term is $\sum_{(u,i)\in D} \frac{o_{u,i}(\hat{e}_{u,i}-e_{u,i})^2}{\hat{p}_{u,i}} \times \frac{(1-\hat{p}_{u,i})}{\hat{p}_{u,i}}$, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed.

When a value of $o_{u,i}$ is 1, $o_{u,i}$ represents that the first sample data is observed; or when a value of $o_{u,i}$ is 0, $o_{u,i}$ represents that the first sample data is not observed.

It can be learned from the formulas of the bias term and the variance term that both the bias term and the variance term include the parameter $o_{u,i}$. When the value of $o_{u,i}$ is 1, $o_{u,i}$ represents that the first sample data is observed; or when the value of $o_{u,i}$ is 0, $o_{u,i}$ represents that the first sample data is not observed. When the value of $o_{u,i}$ is 0, $\frac{o_{u,i}(\hat{e}_{u,i}-e_{u,i})^2}{\hat{p}_{u,i}} \times \frac{(o_{u,i}-\hat{p}_{u,i})^2}{\hat{p}_{u,i}^2}$ in the bias term is 0, and similarly, $\frac{o_{u,i}(\hat{e}_{u,i}-e_{u,i})^2}{\hat{p}_{u,i}} \times \frac{(1-\hat{p}_{u,i})}{\hat{p}_{u,i}}$ in the variance term is also 0. Therefore, it may be considered that the first sample data in this embodiment of this application is observed sample data, namely, labeled sample data.

The loss function of the error imputation model may be obtained by performing weighted summation on the bias term and the variance term based on a weight of the bias term and a weight of the variance term.

Correspondingly, the loss function of the error imputation model may be represented as

$$\mathcal{L} = \sum_{(u,i)\in D} \frac{o_{u,i}\lambda_\xi(x_{u,i})(\hat{e}_{u,i}-e_{u,i})^2}{\hat{p}_{u,i}} \times \frac{(o_{u,i}-\hat{p}_{u,i})^2}{\hat{p}_{u,i}^2} + \sum_{(u,i)\in D} \frac{o_{u,i}(1-\lambda_\xi(x_{u,i}))(\hat{e}_{u,i}-e_{u,i})^2}{\hat{p}_{u,i}} \times \frac{(1-\hat{p}_{u,i})}{\hat{p}_{u,i}}$$

, where $\lambda_\xi(x_{u,i})$ represents the weight of the bias term, and $x_{u,i}$ represents the first sample data.

The weight of the bias term and/or the weight of the variance term may be a hyper-parameter, or may be obtained based on the first sample data.

Step 103: Update a parameter of the error imputation model based on the loss function of the error imputation model.

Specifically, the parameter of the error imputation model may be updated by using the loss function of the error imputation model and a stochastic gradient descent method. Because the stochastic gradient descent method is a mature technology, details are not described herein.

Step 104: Calculate a loss function of the prediction model based on a second error of a prediction result of the prediction model for second sample data, a second output of the error imputation model, a probability that the second sample data is observed, and indication information of the second sample data, where the second output of the error imputation model represents a predicted value of the second error, and the indication information indicates whether the second sample data is observed.

The second sample data may be the same as the first sample data, or may be different from the first sample data. When the second sample data is different from the first sample data, the second sample data may be labeled data, or may be unlabeled data.

It should be noted that when the second sample data is labeled data, the second error may be calculated; or when the second sample data is unlabeled data, the second error cannot be calculated, and only the predicted value of the second error can be used. The entire sample space includes both labeled data and unlabeled data. Therefore, it is considered that the loss function of the prediction model is obtained based on the second error and the second output of the error imputation model.

Specifically, the loss function of the prediction model may be represented as $\mathcal{L}_{DR}$ =

$$\frac{1}{|D|}\sum_{(u,i)\in D}\left[\hat{e}_{u,i} + \frac{o_{u,i}(\hat{e}_{u,i}-e_{u,i})}{\hat{p}_{u,i}}\right] = \frac{1}{|D|}\sum_{(u,i)\in D}\left[\frac{o_{u,i}e_{u,i}}{\hat{p}_{u,i}} + \left(1 - \frac{o_{u,i}}{\hat{p}_{u,i}}\right)\hat{e}_{u,i}\right]$$

, where in the formula, $o_{u,i}$ represents whether the second sample data is observed, $e_{u,i}$ represents the second error, $\hat{e}_{u,i}$ represents the second output of the error imputation model, and $\hat{p}_{u,i}$ represents the probability that the second sample data is observed.

When a value of $o_{u,i}$ is 1, $o_{u,i}$ represents that the second sample data is observed; or when a value of $o_{u,i}$ is 0, $o_{u,i}$ represents that the second sample data is not observed.

It can be learned from the formula that when the value of $o_{u,i}$ is 0, the second sample data is not observed (that is, is unlabeled), and a value of $\frac{o_{u,i}e_{u,i}}{\hat{p}_{u,i}}$ in the formula is 0. In this case, the second error $e_{u,i}$ is not required, and calculation can be completed by using the predicted value $\hat{e}_{u,i}$ of the second error. When the value of $o_{u,i}$ is 1, the second sample data is observed (that is, is labeled), and a value of $\left(1 - \frac{o_{u,i}}{\hat{p}_{u,i}}\right)\hat{e}_{u,i}$ in the formula is 0. In this case, the predicted value $\hat{e}_{u,i}$ of the second error is not required, and calculation can be completed by using the second error $e_{u,i}$.

Step 105: Update a parameter of the prediction model based on the loss function of the prediction model.

Specifically, based on the loss function of the prediction model, the parameter of the prediction model may be updated by using a stochastic gradient descent method. Because the stochastic gradient descent method is a mature technology, details are not described herein.

The prediction model may be any prediction model. For example, the prediction model may be a matrix factorization collaborative filtering model (Matrix Factorization Collaborative Filtering Model, MF), a neural collaborative filtering model (Neural Collaborative Filtering Model, NCF), a factorization machine-based neural network for click-through rate prediction (Factorization Machine-based Neural Network for CTR Prediction, DeepFM) model, and a deep & cross network for advertisement click prediction (Deep & Cross Network for Ad Click Prediction, DCN) model.

It should be noted that in a training process, a parameter updating process of the error imputation model and a parameter updating process of the prediction model are usually alternately performed. That is, the parameter of the prediction model is first kept unchanged, and the parameter of the error imputation model is updated by using some sample data by performing step 101 to step 103; and then the parameter of the error imputation model is kept unchanged, and the parameter of the prediction model is updated by using some sample data by performing step 104.

In this embodiment of this application, the loss function of the error imputation model includes the bias term and the variance term. The bias term represents the bias between the actual loss function and the theoretical loss function of the prediction model, and the variance term represents the variance between the actual loss function and the theoretical loss function of the prediction model. A generalization bound of the prediction model is mainly determined based on an error, a bias, and a variance of the prediction model, and the prediction model is obtained through training by using the error imputation model. Therefore, in this embodiment of this application, the error imputation model is trained by using the loss function including the bias term and the variance term, to improve a generalization capability of the prediction model and improve stability of the prediction model, so that a trained prediction model is close to an unbiased model, to improve prediction accuracy of the model.

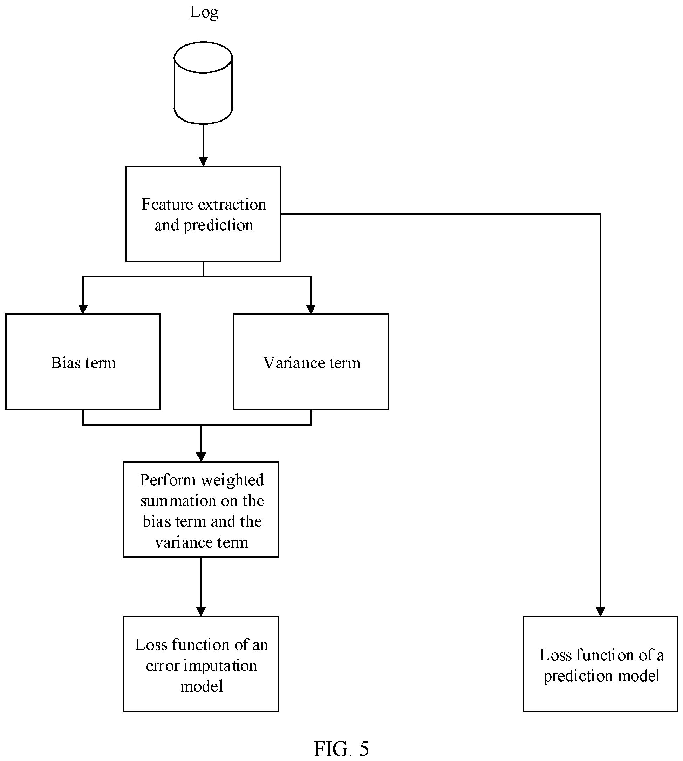

In addition, based on the foregoing descriptions, it can be learned that the prediction model may be trained by using unlabeled data, so that the prediction model is close to an unbiased model, or distribution of observed data may be adjusted, so that the prediction model is close to an unbiased model. In this embodiment of this application, the prediction model is trained by using both a probability that sample data is observed and a predicted value of an error, to establish the loss function of the error imputation model, so that the prediction model after training can be closer to an unbiased model, to further improve prediction accuracy of the model. Based on the foregoing descriptions, as shown in FIG. 5, the method provided in embodiments of this application may be summarized as follows: Feature extraction and prediction are performed on sample data in a log. The prediction herein means to predict the sample data and predict an error of a prediction result of the sample data. Then, a bias term and a variance term are calculated based on the prediction result and a predicted value of the error of the prediction result, and then weighted summation is performed on the bias term and the variance term, to obtain a loss function of an error imputation model. A loss function of a prediction model may be further calculated based on the prediction result and the predicted value of the error of the prediction result. Finally, the error imputation model and the prediction model are alternately trained by using the loss function of the error imputation model and the loss function of the prediction model, to update parameters of the error imputation model and the prediction model.

For ease of understanding, the following provides an application example.

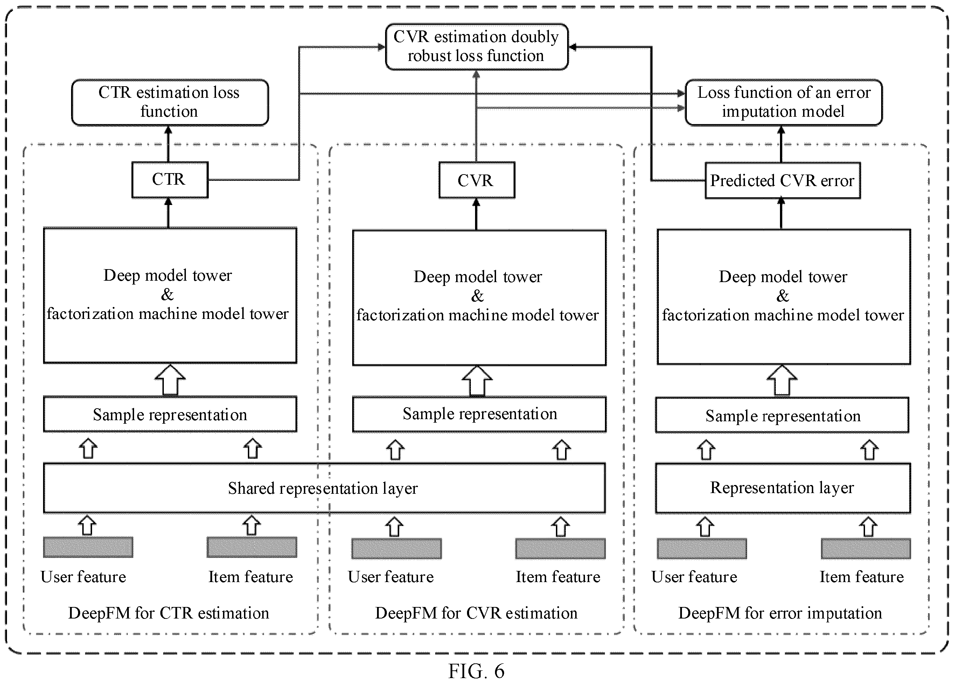

In this application example, the method provided in embodiments of this application is applied to a CVR prediction network architecture shown in FIG. 6. The network architecture includes three parts. A first part of the network architecture is a click-through rate (Click-Through Rate, CTR) prediction model, used for CTR estimation. A second part of the network architecture is a post-click conversion rate (Post-click Conversion Rate, CVR) prediction model, used for CVR estimation. A third part of the network architecture is an error imputation model, used for error imputation estimation. Each of the CTR prediction model, the CVR prediction model, and the error imputation model is a factorization machine-based neural network for click-through rate prediction (Factorization Machine-based Neural Network for CTR Prediction, DeepFM). It should be noted that the DeepFM may be replaced with another neural network.

Each of the CTR prediction model, the CVR prediction model, and the error imputation model includes a representation layer, a deep model tower, and a factorization machine model tower. The CTR prediction model and the CVR prediction model share the representation layer. The representation layer is used to convert a discrete feature (including a user feature and an item feature) into a sample representation (namely, a low-dimensional vector), and the deep model tower and the factorization machine model tower are used to output an estimation result based on an input sample representation.

It can be learned from FIG. 6 that an estimation result of the CTR prediction model is a CTR, and the CTR may be used as a probability that sample data is observed in a CVR prediction process; an estimation result of the CVR prediction model is a CVR; and an estimation result of the error imputation model is a predicted CVR error.

In the method provided in embodiments of this application, because the CTR is used as the probability that sample data is observed in the CVR prediction process, a loss function of the error imputation model may be established based on the CTR and the predicted CVR error, a CTR estimation doubly robust loss function may be established based on the CTR, the CVR, and the predicted CVR error, and then the error imputation model and the CVR prediction model are trained based on the two loss functions. To describe effect of the method provided in embodiments of this application, the following provides a specific example. In this example, the method provided in embodiments of this application is compared with an existing training method.

Specifically, an experiment is performed by using data of a browser advertisement, and a dataset is shown in Table 1 below.

**Table 1 Dataset (M: million, and K: thousand)**

| Dataset | Quantity of exposed samples | Quantity of clicked samples | Quantity of converted samples | Quantity of users | Quantity of items |
|---------|---------|---------|---------|---------|---------|
| Training set | 739.66M | 3.73M | 1.90M | 524K | 68K |
| Test set | 99.73M | 519K | 268K | 283K | 52K |

The CTR prediction model and the CVR prediction model are separately trained by using the training set shown in Table 1, the method provided in embodiments of this application, and the existing training method, then prediction is performed by using the trained models and the test set, and finally, statistics on a prediction result are collected. A statistical result is shown in Table 2, where CTR is a click-through rate (Click-Through Rate), CVR is a post-click conversion rate (Post-click Conversion Rate), and CTCVR is a post-view click-through & conversion rate (Post-view Click-through & Conversion Rate).

**Table 2 Statistical result**

| Model | CTR AUC (%) | CVR AUC (%) | CTCVR AUC (%) |
|-------|-------------|-------------|---------------|
| DCN | 90.763 | 75.691 | 95.254 |
| ESMM | 90.704 | 81.647 | 95.505 |
| DR-JL | 90.754 | 81.768 | 95.548 |
| Multi-IPW | 90.794 | 81.912 | 95.571 |
| Multi-DR | 90.807 | 81.864 | 95.569 |

(continued)

| Model | CTR AUC (%) | CVR AUC (%) | CTCVR AUC (%) |
|---|---|---|---|
| MRDR | 90.721 | 81.810 | 95.535 |
| DR-BIAS | 90.913 | 81.974 | 95.633 |
| DR-MSE | 90.825 | 82.067 | 95.654 |

Herein, DCN is a deep & cross network for advertisement click prediction (Deep & Cross Network for Ad Click Prediction), ESMM is an entire space multi-task model (Entire Space Multi-Task Model), DR-JL is doubly robust joint learning (Doubly Robust Joint Learning), Multi-IPW is a multi-task inverse propensity weighting CVR estimator (Multi-task Inverse Propensity Weighting CVR Estimator), Multi-DR is a multi-task doubly robust CVR estimator (Multi-task Doubly Robust CVR Estimator), MRDR is more robust doubly robust (More Robust Doubly Robust), DR-BIAS is a method for performing training by using the bias term in embodiments of this application as a loss function of an error imputation model, DR-MSE is the training method shown in FIG. 4 in embodiments of this application, and AUC (Area Under Curve) is an evaluation indicator of accuracy of a prediction result, and may be specifically understood as a probability that a classification algorithm ranks a positive sample ahead of a negative sample if the positive sample and the negative sample are randomly selected.

It can be learned from Table 2 that the CTR prediction model, the CVR prediction model, and the CTCVR prediction model that are obtained through training by using the method provided in embodiments of this application have higher prediction accuracy.

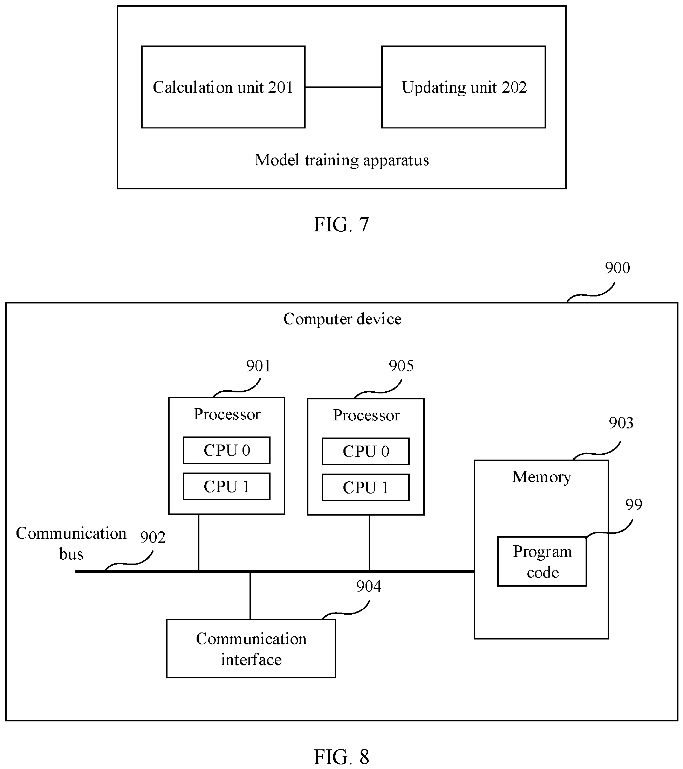

As shown in FIG. 7, this application further provides an embodiment of a model training apparatus, including: a calculation unit 201, configured to calculate a loss function of an error imputation model based on a first error of a prediction result of a prediction model for first sample data, a first output of the error imputation model, and a probability that the first sample data is observed, where the first output of the error imputation model represents a predicted value of the first error, the loss function of the error imputation model includes a bias term and a variance term, the bias term represents a bias between an actual loss function and a theoretical loss function of the prediction model, and the variance term represents a variance between the actual loss function and the theoretical loss function of the prediction model; and an updating unit 202, configured to update a parameter of the error imputation model based on the loss function of the error imputation model.

In an implementation, the bias term is obtained based on the first error, the first output of the error imputation model, and the probability that the first sample data is observed; and/or the variance term is obtained based on the first error, the first output of the error imputation model, and the probability that the first sample data is observed.

In an implementation, the loss function of the error imputation model is obtained by performing weighted summation on the bias term and the variance term based on a weight of the bias term and a weight of the variance term.

In an implementation, the weight of the bias term and/or the weight of the variance term are/is obtained based on the first sample data.

In an implementation, the bias term is $\sum_{(u,i)\in D}\frac{o_{u,i}(\hat{e}_{u,i}-e_{u,i})^2}{\hat{p}_{u,i}}\times\frac{(o_{u,i}-\hat{p}_{u,i})^2}{\hat{p}_{u,i}^2}$, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the variance term is $\sum_{(u,i)\in D}\frac{o_{u,i}(\hat{e}_{u,i}-e_{u,i})^2}{\hat{p}_{u,i}}\times\frac{(1-\hat{p}_{u,i})}{\hat{p}_{u,i}}$, where D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and when a value of $o_{u,i}$ is 1, $o_{u,i}$ represents that the first sample data is observed; or when a value of $o_{u,i}$ is 0, $o_{u,i}$ represents that the first sample data is not observed.

In an implementation, the probability that the first sample data is observed is output by a target probability model based on the input first sample data.

In an implementation, the calculation unit 201 is further configured to calculate a loss function of the prediction model based on a second error of a prediction result of the prediction model for second sample data, a second output of the error imputation model, a probability that the second sample data is observed, and a label of the second sample data, where the second output of the error imputation model represents a predicted value of the second error, and the label of the second sample data indicates whether evaluation of a user on an object is observed; and the updating unit 202 is further configured to update a parameter of the prediction model based on the loss function of the prediction model.

FIG. 8 is a diagram of a structure of a computer device according to an embodiment of this application. As shown in FIG. 8, the computer device 900 is usually a server, and is equipped with the foregoing model training apparatus. The computer device 900 is implemented by using a general bus architecture.

The computer device 900 includes at least one processor 901, a communication bus 902, a memory 903, and at least one communication interface 904.

Optionally, the processor 901 is a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD is a complex programmable logic device (complex programmable logic device, CPLD), a field-programmable gate array (field-programmable gate array, FPGA), generic array logic (generic array logic, GAL), or any combination thereof.

The communication bus 902 is configured to transfer information between the foregoing components. The communication bus 902 is classified into an address bus, a data bus, a control bus, and the like. For ease of representation, only one thick line represents the bus in the figure, but this does not mean that there is only one bus or only one type of bus.

Optionally, the memory 903 is a read-only memory (read-only memory, ROM) or another type of static storage device that can store static information and instructions. Alternatively, the memory 903 is a random access memory (random access memory, RAM) or another type of dynamic storage device that can store information and instructions. Alternatively, the memory 903 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 903 exists independently, and is connected to the processor 901 through the communication bus 902. Optionally, the memory 903 and the processor 901 are integrated.

The communication interface 904 uses any apparatus such as a transceiver, and is configured to communicate with another device or a communication network. The communication interface 904 includes a wired communication interface. Optionally, the communication interface 904 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In specific implementation, in an embodiment, the processor 901 includes one or more CPUs, for example, a CPU 0 and a CPU 1 shown in FIG. 8.

In specific implementation, in an embodiment, the computer device 900 includes a plurality of processors, for example, the processor 901 and a processor 905 shown in FIG. 8. Each of the processors is a single-core (single-CPU) processor or a multi-core (multi-CPU) processor. The processor herein is one or more devices, circuits, and/or processing cores configured to process data (for example, computer program instructions).

In some embodiments, the memory 903 is configured to store program code 99 for executing the solutions of this application, and the processor 901 executes the program code 99 stored in the memory 903. In other words, the computer device 900 implements the foregoing method embodiments through the processor 901 and the program code 99 in the memory 903.

An embodiment of this application further provides a chip, including one or more processors. Some or all of the processors are configured to read and execute a computer program stored in a memory, to perform the method in the foregoing embodiments.

Optionally, the chip includes the memory, and the memory is connected to the processor by using a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method through dedicated hardware. For example, processing related to a neural network model may be implemented by a dedicated neural network processing unit or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may have a function of the model training apparatus in the embodiment corresponding to FIG. 7.

An embodiment of this application further provides a computer program product. The computer program product includes computer software instructions. The computer software instructions may be loaded by a processor to implement the procedures in the method shown in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A model training method, comprising:

   calculating a loss function of an error imputation model based on a first error of a prediction result of a prediction model for first sample data, a first output of the error imputation model, and a probability that the first sample data is observed, wherein the first output of the error imputation model represents a predicted value of the first error, the loss function of the error imputation model comprises a bias term and a variance term, the bias term represents a bias between an actual loss function and a theoretical loss function of the prediction model, and the variance term represents a variance between the actual loss function and the theoretical loss function of the prediction model; and
   updating a parameter of the error imputation model based on the loss function of the error imputation model.

2. The method according to claim 1, wherein the bias term is obtained based on the first error, the first output of the error imputation model, and the probability that the first sample data is observed; and/or
   the variance term is obtained based on the first error, the first output of the error imputation model, and the probability that the first sample data is observed.

3. The method according to claim 1 or 2, wherein
   the loss function of the error imputation model is obtained by performing weighted summation on the bias term and the variance term based on a weight of the bias term and a weight of the variance term.

4. The method according to claim 3, wherein the weight of the bias term and/or the weight of the variance term are/is obtained based on the first sample data.

5. The method according to any one of claims 1 to 4, wherein the bias term is
   $$\sum_{(u,i)\in D} \frac{o_{u,i}(\hat{e}_{u,i}-e_{u,i})^2}{\hat{p}_{u,i}} \times \frac{(o_{u,i}-\hat{p}_{u,i})^2}{\hat{p}_{u,i}^2}$$
   , wherein D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and
   when a value of $o_{u,i}$ is 1, $o_{u,i}$ represents that the first sample data is observed; or when a value of $o_{u,i}$ is 0, $o_{u,i}$ represents that the first sample data is not observed.

6. The method according to any one of claims 1 to 5, wherein the variance term is
   $$\sum_{(u,i)\in D} \frac{o_{u,i}(\hat{e}_{u,i}-e_{u,i})^2}{\hat{p}_{u,i}} \times \frac{(1-\hat{p}_{u,i})}{\hat{p}_{u,i}}$$
   , wherein D represents entire sample space, $(u, i)$ represents the first sample data, $u$ represents a user, $i$ represents a target object, $o_{u,i}$ represents whether the first sample data is observed, $\hat{e}_{u,i}$ represents the first output of the error imputation model, $e_{u,i}$ represents the first error, and $\hat{p}_{u,i}$ represents the probability that the first sample data is observed; and
   when a value of $o_{u,i}$ is 1, $o_{u,i}$ represents that the first sample data is observed; or when a value of $o_{u,i}$ is 0, $o_{u,i}$ represents that the first sample data is not observed.

7. The method according to any one of claims 1 to 6, wherein the probability that the first sample data is observed is output by a target probability model based on the input first sample data.

8. The method according to any one of claims 1 to 7, wherein after the updating a parameter of the error imputation model based on the loss function of the error imputation model, the method further comprises:

   calculating a loss function of the prediction model based on a second error of a prediction result of the prediction model for second sample data, a second output of the error imputation model, a probability that the second sample data is observed, and indication information of the second sample data, wherein the second output of the error imputation model represents a predicted value of the second error, and the indication information indicates whether the second sample data is observed; and
   updating a parameter of the prediction model based on the loss function of the prediction model.

9. A model training apparatus, comprising:

   a calculation unit, configured to calculate a loss function of an error imputation model based on a first error of a prediction result of a prediction model for first sample data, a first output of the error imputation model, and a probability that the first sample data is observed, wherein the first output of the error imputation model represents a predicted value of the first error, the loss function of the error imputation model comprises a bias term and a variance term, the bias term represents a bias between an actual loss function and a theoretical loss function of the prediction model, and the variance term represents a variance between the actual loss function and the theoretical loss function of the prediction model; and
   an updating unit, configured to update a parameter of the error imputation model based on the loss function of the error imputation model.

10. A computer device, wherein the computer device comprises a memory and a processor, wherein the processor is configured to execute a computer program or instructions stored in the memory, to enable the computer device to perform the method according to any one of claims 1 to 8.

11. A computer-readable storage medium, wherein the computer-readable storage medium has program instructions, and when the program instructions are directly or indirectly executed, the method according to any one of claims 1 to 8 is implemented.

12. A chip system, wherein the chip system comprises at least one processor, the processor is configured to execute a computer program or instructions stored in a memory, and when the computer program or the instructions are executed in the at least one processor, the method according to any one of claims 1 to 8 is implemented.

13. A computer program product, comprising instructions, wherein when the instructions are run on a computer, the computer is enabled to perform the method according to any one of claims 1 to 8.

User

Object 1
Object 2
Object 3
...

*User feedback data*

Online prediction module

Prediction model

Log library

Offline training module

FIG. 1

Movie

| | 0 | 1 | 2 | 3 | 4 |
|---|---|---|---|---|---|
| 0 | ? | 3 | 4 | 5 | 2 |
| 1 | 3 | 5 | 2 | 2 | 5 |
| 2 | 5 | 3 | ? | 4 | 3 |
| 3 | 5 | 5 | 5 | ? | 5 |
| 4 | 2 | 3 | ? | 2 | 3 |

User

FIG. 2

FIG. 3

| |
|---|
| Output, by using a target probability model and based on input first sample data, a probability that the first sample data is observed |

101

| |
|---|
| Calculate a loss function of an error imputation model based on a first error of a prediction result of a prediction model for the first sample data, a first output of the error imputation model, and the probability that the first sample data is observed |

102

| |
|---|
| Update a parameter of the error imputation model based on the loss function of the error imputation model |

103

| |
|---|
| Calculate a loss function of the prediction model based on a second error of a prediction result of the prediction model for second sample data, a second output of the error imputation model, a probability that the second sample data is observed, and indication information of the second sample data |

104

| |
|---|
| Update a parameter of the prediction model based on the loss function of the prediction model |

105

FIG. 4

Log

FIG. 5

FIG. 6

EP 4 550 224 A1

```
┌─────────────────────────────────────────────────────────────┐
│                                                             │
│   ┌─────────────────────┐      ┌─────────────────────┐      │
│   │                     │      │                     │      │
│   │ Calculation unit 201│──────│  Updating unit 202  │      │
│   │                     │      │                     │      │
│   └─────────────────────┘      └─────────────────────┘      │
│                                                             │
│               Model training apparatus                      │
│                                                             │
└─────────────────────────────────────────────────────────────┘
```

FIG. 7

900

```
┌──────────────────────────────────────────────────────────────────────┐
│                         Computer device                                │
│                                                                        │
│              901              905                                       │
│                                                       903              │
│       ┌────────────┐   ┌────────────┐                                  │
│       │ Processor  │   │ Processor  │      ┌──────────────┐            │
│       │ ┌────────┐ │   │ ┌────────┐ │      │   Memory     │   99       │
│       │ │ CPU 0  │ │   │ │ CPU 0  │ │      │              │            │
│       │ ├────────┤ │   │ ├────────┤ │      │ ┌──────────┐ │            │
│       │ │ CPU 1  │ │   │ │ CPU 1  │ │      │ │ Program  │ │            │
│       │ └────────┘ │   │ └────────┘ │      │ │  code    │ │            │
│       └─────┬──────┘   └─────┬──────┘      │ └──────────┘ │            │
│Communication   902           │             └──────┬───────┘            │
│   bus   ─────────────────────┴────────────────────┘                    │
│                         │       904                                    │
│                  ┌──────┴───────┐                                      │
│                  │Communication │                                      │
│                  │  interface   │                                      │
│                  └──────────────┘                                      │
└──────────────────────────────────────────────────────────────────────┘
```

FIG. 8

<table>
<tr><td colspan="2" align="center">INTERNATIONAL SEARCH REPORT</td><td colspan="2">International application No.<br><br>**PCT/CN2023/103919**</td></tr>
</table>

**A.    CLASSIFICATION OF SUBJECT MATTER**

G06N 20/00(2019.01)i

According to International Patent Classification (IPC) or to both national classification and IPC

**B.    FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 归咎模型, 插补模型, 双稳健, 双鲁棒, 偏差, 方差, 损失函数, 模型, 训练, 预测, 观测, 推荐, imputation, model, error, learning, doubly robust, DR, bias, variance, loss, train+, predict+, observe, recommend

**C.    DOCUMENTS CONSIDERED TO BE RELEVANT**

| Category* | Citation of document, with indication, where appropriate, of the relevant passages | Relevant to claim No. |
|---|---|---|
| A | CN 113508378 A (HUAWEI TECHNOLOGIES CO., LTD.) 15 October 2021 (2021-10-15) entire document | 1-13 |
| A | US 2022108334 A1 (ADOBE INC.) 07 April 2022 (2022-04-07) entire document | 1-13 |
| A | US 2022093271 A1 (CHILDREN'S HOSPITAL MEDICAL CENTER) 24 March 2022 (2022-03-24) entire document | 1-13 |
| A | GUO, Siyuan et al. "Enhanced Doubly Robust Learning for Debiasing Post-Click Conversion Rate Estimation" *arXiv.org*, 09 January 2022 (2022-01-09), 1-10 sections 2-3 | 1-13 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2023** | **12 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 550 224 A1**

| INTERNATIONAL SEARCH REPORT | International application No. |
|---|---|
| | **PCT/CN2023/103919** |

**C.    DOCUMENTS CONSIDERED TO BE RELEVANT**

| Category* | Citation of document, with indication, where appropriate, of the relevant passages | Relevant to claim No. |
|---|---|---|
| A | WANG, Xiaojie et al. "Doubly Robust Joint Learning for Recommendation on Data Missing Not at Random" <br> *Proceedings of the 36th International Conference on Machine Learning,* <br> 31 December 2019 (2019-12-31), 1-10 <br>     entire document | 1-13 |

Form PCT/ISA/210 (second sheet) (July 2022)

20

**INTERNATIONAL SEARCH REPORT**
Information on patent family members

| International application No. |
| --- |
| **PCT/CN2023/103919** |

| Patent document cited in search report | | | Publication date (day/month/year) | Patent family member(s) | | | Publication date (day/month/year) |
| --- | --- | --- | --- | --- | --- | --- | --- |
| CN | 113508378 | A | 15 October 2021 | WO | 2021081962 | A1 | 06 May 2021 |
| | | | | EP | 3862893 | A1 | 11 August 2021 |
| | | | | US | 2021248651 | A1 | 12 August 2021 |
| | | | | EP | 3862893 | A4 | 01 December 2021 |
| US | 2022108334 | A1 | 07 April 2022 | None | | | |
| US | 2022093271 | A1 | 24 March 2022 | WO | 2020154573 | A1 | 30 July 2020 |

Form PCT/ISA/210 (patent family annex) (July 2022)

**REFERENCES CITED IN THE DESCRIPTION**

**Patent documents cited in the description**

- CN 202210836072